# EUROPEAN PATENT APPLICATION

(11) **EP 4 799 853 A1**
(43) Date of publication of application: **02.09.2026**
(21) Application number: 25772378.3
(22) Date of filing: 10.03.2025
(51) Int. Cl.: B60L 53/12, B60L 55/00, H02J 50/12, H02J 50/90

(54) **BI-DIRECTIONAL WIRELESS POWER TRANSFER SYSTEM AND METHOD USING SWITCHING CONTROLLED CAPACITOR**

(30) Priority: 13.03.2024 KR 20240035476
(71) Applicant: Hyundai Motor Company, Seoul 06797 (KR); Kia Corporation, Seoul 06797 (KR); Industry Foundation of Chonnam National University, Gwangju 61186 (KR)
(72) Inventor: CHI, Soung Hwan, Hwaseong-si, Gyeonggi-do 18280 (KR); KIM, Dong hee, Gwangju 61186 (KR); JO, Seungjin, Gwangju 61091 (KR)
(74) Representative: Isarpatent
(86) International application number: PCT/KR2025/003103
(87) International publication number: WO 2025/192939

(57) **Abstract**

A power transfer/reception device for charging an electric vehicle is disclosed. The device comprises a primary coil, a secondary coil and an inductor-capacitor-capacitor (LCC) compensation circuit, wherein the LCC compensation circuit can include at least one switching-controlled capacitor (SCC) compensation circuit. In the transfer of power between the transfer/reception devices, which uses the device so as to efficiently transfer power between power transfer/reception devices and which supports a bi-directional charging mode, it is possible to implement a method in which operating frequency for achieving rated output and zero-voltage switching is determined, a compensation circuit is implemented and an operating mode of the compensation circuit is determined, and a method for operating a compensation circuit structure for impedance phase margin compensation and output characteristic control.

## Description

### [Technical Field]

The present disclosure relates to a wireless power transfer (WPT, Wireless Power Transfer) technology based on induced power transfer (IPT, Induced Power Transfer) for charging an electric vehicle, and more particularly, relates to a circuit implementation supporting bidirectional wireless charging and a control technology of wireless charging, and relates to a bi-directional wireless power transfer system and method using a switching-controlled capacitor.

### [Background Art]

The content described in this section merely provides background information on the present disclosure and does not constitute the prior art.

Electric vehicles (Electric Vehicle, EV) that have been recently developed have advantages in that a motor is driven by power of a battery, thereby having less air pollution sources such as exhaust gas and noise compared to conventional gasoline engine vehicles, having fewer failures, having a longer lifespan, and having simple driving operation.

Electric vehicles are classified into a hybrid electric vehicle (Hybrid Electric Vehicle, HEV), a plug-in hybrid electric vehicle (Plug-in Hybrid Electric Vehicle, PHEV), and an electric vehicle (EV) based on a driving source. HEV includes an engine as main power and a motor as auxiliary power. PHEV includes a motor as main power and an engine used when a battery is discharged. EV includes a motor but does not include an engine.

An electric vehicle charging system may be defined as a system that charges a battery mounted in an electric vehicle by using power of a distribution network (grid) of a commercial power source or an energy storage device. Such an electric vehicle charging system may have various forms depending on a type of an electric vehicle. For example, an electric vehicle charging system may include a conductive charging system using a cable or a non-contact wireless power transfer system.

During charging of an electric vehicle, a vehicle assembly (vehicle assembly, VA) mounted in an electric vehicle forms an inductive resonant coupling with a transmission pad of a ground assembly (ground assembly, GA) positioned in a charge station or charging spots, and may charge a battery of an electric vehicle by using power transmitted from a ground assembly through the inductive resonant coupling.

During charging of an electric vehicle, a robot arm or a manipulator may be used in order to supply power from an electric vehicle supply equipment (EVSE) to an electric vehicle charger.

At this time, in consideration of various types of electric vehicle chargers, various types of electric vehicle supply equipment, and various charging schemes, etc., a procedure definition for positioning between an electric vehicle and a manipulator and for a preparation stage for power supply is required.

### [Disclosure]

### [Technical Problem]

An object of the present disclosure for solving the above-described problems is to propose, in a system for supplying power from a power supply device or an electric vehicle supply equipment (EVSE, Electric Vehicle Supply Equipment) to an electric vehicle, an efficient power transmission control technique based on inductive coupling between a power transmitting device and a power receiving device and input/output characteristics when a bidirectional charging mode is provided.

An object of the present disclosure is to propose, in power transmission between a power transmitting device and a power receiving device supporting a bidirectional charging mode, a method for determining an operating frequency for achieving a rated output and zero voltage switching (ZVS, Zero Voltage Switching), implementing a compensation circuit, and/or determining an operating mode of a compensation circuit.

An object of the present disclosure is to propose, in power transmission between a power transmitting device and a power receiving device supporting a bidirectional charging mode, a compensation circuit structure for impedance phase margin compensation and output characteristic control, and to propose an operation method of the compensation circuit.

### [Technical Solution]

According to exemplary embodiments of the present disclosure for achieving the above object, a power receiving device arranged in a chargeable mobility or device and receiving power from a primary device may include a secondary coil; and an inductor-capacitor-capacitor (LCC) compensation circuit that delivers power transmitted from the secondary coil to a charger.

According to exemplary embodiments of the present disclosure, in a power receiving device arranged in a chargeable mobility or device, the inductor-capacitor-capacitor compensation circuit may include one or more switching-controlled capacitor (SCC) compensation circuits.

According to exemplary embodiments of the present disclosure, in a power receiving device arranged in a chargeable mobility or device, one or more switching-controlled capacitor compensation circuits may be connected in series or in parallel with one or more of passive elements in the inductor-capacitor-capacitor compensation circuit.

According to exemplary embodiments of the present disclosure, in a power receiving device arranged in a chargeable mobility or device, one or more switching-controlled capacitor compensation circuits may include a switching-controlled capacitor; and a control switch connected in series with the switching-controlled capacitor and operated by a switching control signal.

According to exemplary embodiments of the present disclosure, in a power receiving device arranged in a chargeable mobility or device, one or more switching-controlled capacitor compensation circuits may provide an impedance that varies based on a duty cycle of a control switch.

According to exemplary embodiments of the present disclosure, in a power receiving device arranged in a chargeable mobility or device, a switching control signal may be a pulse-based control signal.

According to exemplary embodiments of the present disclosure, in a power receiving device arranged in a chargeable mobility or device, an operating condition of one or more switching-controlled capacitor compensation circuits may be determined based on a change in an effective impedance characteristic of a secondary coil according to a separation distance between a primary coil of a primary device and a secondary coil.

According to exemplary embodiments of the present disclosure, in a power receiving device arranged in a chargeable mobility or device, an operating condition of one or more switching-controlled capacitor compensation circuits may be determined based on whether a mode is a grid-to-vehicle power transfer mode in which a secondary coil receives power or a vehicle-to-grid power transfer mode in which power is transmitted from a secondary coil.

According to exemplary embodiments of the present disclosure, in a power receiving device arranged in a chargeable mobility or device, an operating condition of one or more switching-controlled capacitor compensation circuits may be determined based on whether one or more transmission switching-controlled capacitor compensation circuits are included in a transmission inductor-capacitor-capacitor compensation circuit on a primary device side.

According to exemplary embodiments of the present disclosure, in a power receiving device arranged in a chargeable mobility or device, an operating condition of one or more switching-controlled capacitor compensation circuits may be determined based on one or more of a topology of one or more transmission switching-controlled capacitor compensation circuits included in a transmission inductor-capacitor-capacitor compensation circuit on a primary device side or a topology of one or more switching-controlled capacitor compensation circuits.

According to exemplary embodiments of the present disclosure, a power transmitting device associated with a primary device and transmitting power to a chargeable mobility or device may include a primary coil; and an inductor-capacitor-capacitor (LCC) compensation circuit that delivers power from a power grid to a primary coil.

According to exemplary embodiments of the present disclosure, in a power transmitting device associated with EVSE, the inductor-capacitor-capacitor compensation circuit may include one or more switching-controlled capacitor (SCC) compensation circuits.

According to exemplary embodiments of the present disclosure, in a power transmitting device associated with EVSE, one or more switching-controlled capacitor compensation circuits may be connected in series or in parallel with one or more of passive elements in the inductor-capacitor-capacitor compensation circuit.

According to exemplary embodiments of the present disclosure, in a power transmitting device associated with EVSE, one or more switching-controlled capacitor compensation circuits may include a switching-controlled capacitor; and a control switch connected in series with the switching-controlled capacitor and operated by a switching control signal.

According to exemplary embodiments of the present disclosure, a power transmission method may include obtaining an effective impedance characteristic of a secondary coil in a power receiving device arranged in a chargeable mobility or device and receiving power from a primary device; determining, based on an effective impedance characteristic of a secondary coil, an operating condition of one or more switching-controlled capacitor (SCC) compensation circuits in an inductor-capacitor-capacitor (LCC) compensation circuit that delivers power transmitted from a secondary coil to a charger; and performing wireless power transfer by inductive coupling of a secondary coil based on an operating condition.

In determining an operating condition of one or more switching-controlled capacitor compensation circuits, an operating condition of one or more switching-controlled capacitor compensation circuits may be determined based on a change in an effective impedance characteristic of a secondary coil according to a separation distance between a primary coil of a primary device and a secondary coil.

In determining an operating condition of one or more switching-controlled capacitor compensation circuits, an operating condition of one or more switching-controlled capacitor compensation circuits may be determined based on whether a mode is a grid-to-vehicle power transfer mode in which a secondary coil receives power or a vehicle-to-grid power transfer mode in which power is transmitted from a secondary coil.

In determining an operating condition of one or more switching-controlled capacitor compensation circuits, an operating condition of one or more switching-controlled capacitor compensation circuits may be determined based on whether one or more transmission switching-controlled capacitor compensation circuits are included in a transmission inductor-capacitor-capacitor compensation circuit on a primary device side.

In determining an operating condition of one or more switching-controlled capacitor compensation circuits, an operating condition of one or more switching-controlled capacitor compensation circuits may be determined based on one or more of a topology of one or more transmission switching-controlled capacitor compensation circuits included in a transmission inductor-capacitor-capacitor compensation circuit on a primary device side or a topology of one or more switching-controlled capacitor compensation circuits.

In obtaining an effective impedance characteristic of a secondary coil, an effective impedance characteristic of a secondary coil may be obtained in an initial power transfer process or a test power transfer process.

In performing wireless power transfer by inductive coupling of a secondary coil based on an operating condition, an impedance that varies based on a duty cycle of a control switch may be provided by controlling, by a switching control signal, a duty cycle of a control switch connected in series with a switching-controlled capacitor in one or more switching-controlled capacitor compensation circuits.

According to exemplary embodiments of the present disclosure, the power transmission method may further include, before determining an operating condition of one or more switching-controlled capacitor compensation circuits, obtaining whether one or more transmission switching-controlled capacitor compensation circuits are included in a transmission inductor-capacitor-capacitor compensation circuit on a primary device side or topology information of one or more transmission switching-controlled capacitor compensation circuits.

### [Advantageous Effects]

According to exemplary embodiments of the present disclosure, in a system for supplying power from a power supply device or an electric vehicle supply equipment (EVSE, Electric Vehicle Supply Equipment) to an electric vehicle, an efficient power transmission control technique based on inductive coupling between a power transmitting device and a power receiving device and input/output characteristics may be implemented when a bidirectional charging mode is provided.

According to exemplary embodiments of the present disclosure, in power transmission between a power transmitting device and a power receiving device supporting a bidirectional charging mode, a method for determining an operating frequency for achieving a rated output and zero voltage switching (ZVS, Zero Voltage Switching), implementing a compensation circuit, and/or determining an operating mode of a compensation circuit may be implemented.

According to exemplary embodiments of the present disclosure, in power transmission between a power transmitting device and a power receiving device supporting a bidirectional charging mode, a compensation circuit structure for impedance phase margin compensation and output characteristic control may be proposed, and an operation method of the compensation circuit may be implemented.

### [Description of Drawings]

FIG. 1 is a diagram conceptually illustrating exemplary embodiments of a wireless power transfer system (Wireless Power Transfer System).
FIG. 2 is a diagram conceptually illustrating exemplary embodiments of a wireless power transfer system including a double-sided inductor-capacitor-capacitor (DS-LCC, Double-Sided LCC) compensation circuit.
FIG. 3 is a diagram conceptually illustrating exemplary embodiments of an induced power transfer (IPT, Induced Power Transfer) converter of FIG. 2.
FIG. 4 is a diagram conceptually illustrating a wireless power transfer system including a DS-LCC compensation circuit according to exemplary embodiments of the present disclosure.
FIG. 5 is a diagram conceptually illustrating an equivalent circuit of a wireless power transfer system including a DS-LCC compensation circuit according to exemplary embodiments of the present disclosure.
FIG. 6 is a diagram conceptually illustrating exemplary embodiments of a switching-controlled capacitor (SCC) included as a part of a DS-LCC compensation circuit according to exemplary embodiments of the present disclosure.
FIG. 7 is a diagram conceptually illustrating exemplary embodiments of a switching-controlled capacitor (SCC) included as a part of a DS-LCC compensation circuit according to exemplary embodiments of the present disclosure.
FIG. 8 is a diagram conceptually illustrating exemplary embodiments of a switching-controlled capacitor (SCC) included as a part of a DS-LCC compensation circuit according to exemplary embodiments of the present disclosure.
FIG. 9 is a diagram conceptually illustrating a switching-controlled capacitor (SCC) circuit according to exemplary embodiments of the present disclosure.
FIG. 10 is a flowchart illustrating a wireless power transfer method according to exemplary embodiments of the present disclosure.
FIG. 11 is a flowchart illustrating a wireless power transfer method according to exemplary embodiments of the present disclosure.
FIG. 12 is a block diagram illustrating a generalized configuration of a generalized wireless power transmission pad device, a wireless power reception pad device, a wireless power transfer (WPT, Wireless Power Transfer) system, or a computing system controlling the wireless power transmission pad device, the wireless power reception pad device, and the wireless power transfer system according to exemplary embodiments of the present disclosure.

### [Best mode of the Invention]

The present disclosure may be subject to various modifications and may have various exemplary embodiments, and thus specific exemplary embodiments are illustrated in the drawings and are intended to be described in detail in the detailed description. However, this is not intended to limit the present disclosure to specific embodiments, and it should be understood that all modifications, equivalents, and substitutes included within the spirit and technical scope of the present disclosure are included. In describing each drawing, similar reference numerals have been used for similar components.

Terms such as first, second, A, B, etc. may be used to describe various components, but the components should not be limited by the terms. The terms are used only for the purpose of distinguishing one component from another component. For example, a first component may be named as a second component without departing from the scope of the present disclosure, and similarly a second component may also be named as a first component. The term "and/or" includes a combination of a plurality of related described items or any one of a plurality of related described items.

When a component is referred to as being "connected to" or "coupled to" another component, the component may be directly connected to or coupled to the other component, or another component may be present in between. On the other hand, when a component is referred to as being "directly connected to" or "directly coupled to" another component, it should be understood that no other component is present in between.

Terms used in the present application are used only to describe specific exemplary embodiments, and are not intended to limit the present disclosure. Singular expressions include plural expressions unless the context clearly indicates otherwise. In the present application, terms such as "include" or "have" are intended to specify the presence of features, numbers, steps, operations, components, parts, or combinations thereof described in the specification, and should not be understood as precluding in advance the presence or addition possibility of one or more other features, numbers, steps, operations, components, parts, or combinations thereof.

Unless otherwise defined, all terms used herein including technical or scientific terms have the same meaning as commonly understood by a person having ordinary skill in the art to which the present disclosure belongs. Terms defined in generally used dictionaries should be interpreted as having meanings consistent with meanings in the context of the related art, and should not be interpreted in an ideal or excessively formal sense unless explicitly defined in the present application.

Terms used in the present disclosure are defined as follows.

"Electric Vehicle (EV)": An automobile, as defined in 49 CFR 523.3, intended for highway use, powered by an electric motor that draws current from an on-vehicle energy storage device, such as a battery, which is rechargeable from an off-vehicle source, such as residential or public electric service or an on-vehicle fuel powered generator.

The EV may include an electric vehicle, an electric automobile, an electric road vehicle (ERV), a plug-in vehicle (PV), an electromotive vehicle (xEV), etc., and the xEV may be classified into a plug-in all-electric vehicle (BEV), a battery electric vehicle, a plug-in electric vehicle (PEV), a hybrid electric vehicle (HEV), a hybrid plug-in electric vehicle (HPEV), a plug-in hybrid electric vehicle (PHEV), etc.

"Plug-in Electric Vehicle (PEV)": An Electric Vehicle that recharges the on-vehicle primary battery by connecting to the power grid.

"Plug-in vehicle (PV)": An electric vehicle rechargeable via wireless charging from an electric vehicle supply equipment (EVSE) without using a physical plug or a physical socket.

"Heavy duty vehicle (H.D. Vehicle)": Any four-or more wheeled vehicle as defined in 49 CFR 523.6 or 49 CFR 37.3 (bus).

"Light duty plug-in electric vehicle": A three or four-wheeled vehicle propelled by an electric motor drawing current from a rechargeable storage battery or other energy devices for use primarily on public streets, roads and highways and rated at less than 4,545 kg gross vehicle weight.

"Wireless power charging system (WCS)": A system for wireless power transfer and control of interactions including operations for an alignment and communications between a supply device (or ground assembly) and an EV device (or vehicle assembly).

"Wireless power transfer (WPT)": A transfer of electric power between a power source such as a utility, the power grid, an energy storage device, a fuel cell generator and the EV through a contactless channel such as electromagnetic induction and resonance.

"Utility": A set of systems which supply electrical energy and include a customer information system (CIS), an advanced metering infrastructure (AMI), rates and revenue system, etc. The utility may provide an EV with energy through rates table and discrete events. Also, the utility may provide information related to certification on EVs, interval of power consumption measurements, and tariff.

"Smart charging": A system in which EVSE and/or EV (including the PEV, or PHEV) communicate with power grid to optimize charging ratio or discharging ratio of EV by reflecting capacity of the power grid or expense of use.

"Automatic charging": A procedure in which inductive charging is automatically performed after a vehicle is located in a proper position corresponding to a primary charger assembly which may transfer power by a conductive or inductive charging. The automatic charging may be performed after obtaining necessary authentication and right.

"Interoperability": A state in which components of a system interwork with corresponding components of the system to perform operations aimed by the system. Additionally, information interoperability may refer to capability that two or more networks, systems, devices, applications, or components may efficiently share and easily use information without causing inconvenience to users.

"Inductive charging system": A system transferring energy from a power source to an EV via a two-part gapped core transformer in which the two halves of the transformer, i.e., primary and secondary coils, are physically separated from one another. In the present disclosure, the inductive charging system may correspond to an EV power transfer system.

"Inductive coupler": A transformer formed by the primary coil in the primary device or a ground assembly (GA) and the secondary coil in the secondary device or a vehicle assembly (VA) that allows power to be transferred through electric isolation.

"Inductive coupling": A magnetic coupling between two coils. One of the two coils may refer to a primary coil or GA coil, and the other one of the two coils may refer to a secondary coil or vehicle assembly VA coil.

"Supply Power Circuit (SPC) or "Ground assembly (GA)": An assembly disposed on a primary device or the ground assembly or an infrastructure side including the primary coil (or GA coil) and other components. The other components may include at least one part to control the impedance and resonant frequency, a ferrite enforcing the magnetic path, and electromagnetic shielding materials. For example, the SPC or GA may include a power/frequency conversion unit and a SPC controller (or GA controller) necessary to function as a power source of a wireless power charging system, a wiring from the grid, and wirings between each unit, filtering circuits, and a housing.

"EV power circuit (EVPC)" or "Vehicle assembly (VA)": An assembly mounted on the vehicle including the secondary coil (or VA Coil) and other components. The other components may include at least one part to control the impedance and resonant frequency, a ferrite enforcing the magnetic path, and electromagnetic shielding materials. For example, the EVPC or VA may include a power/frequency conversion unit and a EVPC controller (or VA controller) necessary to as the vehicle part of a wireless power charging system, wiring to the vehicle batteries, and wirings between each unit, filtering circuits, and a housing.

The SPC may be referred to as or identified by the ground assembly (GA) or the like. Similarly, the EVPC may be referred to as or identified by the vehicle assembly (VA) or the like.

The GA may be referred to as the primary device, or the like, and the VA may be referred to as the EV device, the secondary device, or the like.

The GA may be referred to as the supply device, a power supply side device, or the like, and the VA may be referred to as the EV device, an EV side device, or the like.

"Primary device": An apparatus providing the contactless coupling to the secondary device. In other words, the primary device may be an apparatus external to an EV. When the EV is receiving power, the primary device may operate as the source of the power to be transferred. The primary device may include the housing and all covers.

"Secondary device": An apparatus mounted on the EV providing the contactless coupling to the primary device. In other words, the secondary device may be provided within the EV. When the EV is receiving power, the secondary device may transfer the power from the primary device to the EV. The secondary device may include the housing and all covers.

"Supply Power Electronics" indicates a portion of the SPC or GA regulating an output power level of the primary coil (or GA Coil) based on information from the vehicle. "EV Power Electronics" indicates a portion of the EVPC or VA monitoring specific on-vehicle parameters during the charging and initiating communications with the EVPC or GA to facilitate the adjustment of the output power level.

The Supply Power Electronics may be referred to as GA electronics, a GA controller, or a primary device communication controller (PDCC), and the EV Power Electronics may be referred to as VA electronics, a VA controller, or an electric vehicle communication controller (EVCC).

"Magnetic gap": A vertical distance between the plane of the higher of the top of the litz wire or the top of the magnetic material in the primary coil/GA Coil to the plane of the lower of the bottom of the litz wire or the magnetic material in the secondary coil/VA Coil when aligned.

"Ambient temperature": A ground-level temperature of the air measured at a subsystem under consideration and not in direct sun light.

"Vehicle ground clearance": A vertical distance between a ground surface and a lowest part of a vehicle floor pan.

"Vehicle magnetic ground clearance": A vertical distance between the plane of the lower of the bottom of the litz wire or the magnetic material in the secondary coil or VA Coil mounted on the vehicle to the ground surface.

"Secondary coil surface distance" or "VA coil magnetic surface distance": A distance between a plane of a nearest magnetic or conducting component surface to a lower external surface of the secondary coil or VA coil when mounted. Such a distance may include any protective coverings and additional items which may be packaged in the secondary coil or VA coil enclosure.

The secondary coil may be referred to as the VA coil, a vehicle coil, or a receiver coil. Similarly, the primary coil may be referred to as the GA coil or a transmit coil.

"Exposed conductive component": A conductive component of electrical equipment (e.g., an electric vehicle) that may be touched, and is not normally energized but may become energized when a fault occurs.

"Hazardous live component": A live component which, under certain conditions, may generate a harmful electric shock.

"Live component": Any conductor or conductive component intended to be electrically energized in normal use.

"Direct contact": A contact of a person with a live component. See IEC 61140 standard.

"Indirect contact": A contact of a person with exposed, conductive, and energized components made live by an insulation failure. See IEC 61140 standard.

"Alignment": A process of finding a relative position of the secondary device with respect to the primary device and/or a relative position of the primary device with respect to the secondary device for an efficient power transfer. In the present disclosure, the alignment may be directed to the alignment in the wireless power transfer system but may not be limited thereto.

"Pairing": A process of associating the vehicle (EV) with a single dedicated supply device (primary device) disposed such that the power transfer may occur. The pairing may include a process of associating the EVPC or VA controller with the SPC or GA controller of the charging spot.

The correlation or association process may include a process of establishing a relationship between two peer communication entities.

"Command and control communications": Communications for exchanging information required for starting, controlling, and ending the wireless power transfer process between an electric vehicle supply equipment and an electric vehicle.

"High-level communication (HLC)": A digital communication capable of handling all information not covered by the command and control communications. The data link of the HLC may use a power line communication (PLC) but is not limited thereto.

"Low-power excitation (LPE)": A technique of activating the supply device (or primary device) for the fine positioning and pairing so that the EV may detect the supply device, and vice versa.

"Service set identifier (SSID)": A unique identifier including 32-characters attached to a header of a packet transmitted on a wireless LAN. The SSID identifies the basic service set (BSS) to which the wireless device attempts to connect. The SSID distinguishes multiple wireless LANs. Therefore, all access points (APs) and all terminal/station devices that want to use a specific wireless LAN may use the same SSID. Devices that do not use a unique SSID are not able to join the BSS. Because the SSID is shown as plain text, the SSID may not provide any security features to the network.

"Extended service set identifier (ESSID)": A name of the network to which one desires to connect. ESSID is similar to SSID but a more extended concept.

"Basic service set identifier (BSSID)": BSSID including 48bits is used to distinguish a specific BSS. With an infrastructure BSS network, the BSSID may be configured for medium access control (MAC) of the AP equipment. For an independent BSS or Ad-hoc network, the BSSID may be generated with any value.

The charging station may include at least one GA and at least one GA controller configured to manage the at least one GA. The GA may include at least one wireless communication device. The charging station may refer to a place or location including at least one GA, which is provided in home, office, public place, road, parking area, etc.

In the present specification, "association" may be used as a term representing a procedure for establishing wireless communication between the electric vehicle communication controller (EVCC) and the supply equipment communication controller (SECC) controlling the charging infrastructure.

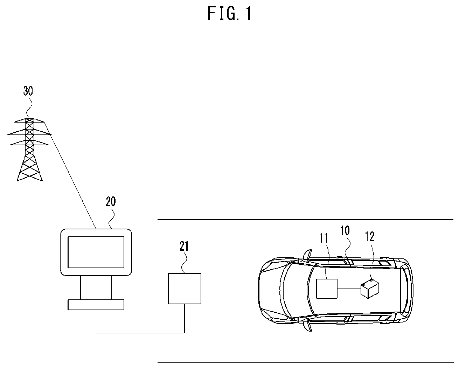

Hereinafter, detailed aspects of the present disclosure will be described through exemplary embodiments illustrated in FIGS. 1 to 16.

FIG. 1 is a diagram conceptually illustrating exemplary embodiments of a wireless power transfer system (Wireless Power Transfer System).

As shown in FIG. 1, an electric vehicle charging process may be performed by at least one component of an electric vehicle (electric vehicle, 10) and a charging station (charging station), and may be used to transmit power to the electric vehicle 10 in a wired or wireless manner.

An electric vehicle 10 according to exemplary embodiments of the present disclosure may include a hybrid vehicle having both an electric motor and a general internal combustion engine (internal combustion engine), and may include not only an automobile but also a motorcycle, a cart, a scooter, an electric bicycle, etc.

Here, the electric vehicle 10 may be defined as a vehicle (automobile) that supplies current derived from a rechargeable energy storage device such as a battery 12 as an energy source of an electric motor that is a power device.

In addition, the electric vehicle 10 may include a power receiving device/pad 11 including a receiving coil in order to charge a battery 12 wirelessly, and may further include a plug connection port in order to charge a battery 12 in a wired manner. At this time, an electric vehicle 10 capable of charging a battery 12 in a wired manner may be referred to as a plug-in electric vehicle (Plug-in Electric Vehicle, PEV).

Here, a charging station may be connected to a power grid (power grid, 30) or a power backbone, and may provide alternating current (AC) or direct current (DC) power to a power transmitting device/pad 21 including a transmission coil through a power link.

In addition, a charging station may communicate with a power grid 30 or an infrastructure management system or an infrastructure server managing a power grid 30 through wired or wireless communication, and may perform wireless communication with an electric vehicle 10. Here, wireless communication may include Bluetooth, zigbee, cellular, wireless local area network, etc.

In addition, for example, a charging station may be located at various places such as a parking lot attached to a house of an owner of an electric vehicle 10, a parking area for electric vehicle charging at a gas station, a parking area of a shopping center or a workplace, etc.

Here, a process of charging a battery 12 of an electric vehicle 10 in a wired/wireless manner may be performed by first positioning a power receiving device/pad 11 of an electric vehicle 10 in an energy field formed by a power transmitting device/pad 21, and by interaction or coupling between a transmission coil of a power transmitting device/pad 21 and a receiving coil of a power receiving device/pad 11. As a result of the interaction or coupling, an electromotive force may be induced in a power receiving device/pad 11, and a battery 12 may be charged by the induced electromotive force.

In addition, a charging station and a power transmitting device/pad may be referred to, in whole or in part, as a supply power circuit (SPC) or a ground assembly (Ground Assembly, GA, 20), and SPC or a ground assembly may refer to a meaning defined above.

In addition, a power receiving device/pad 11 of an electric vehicle 10 and all or part of other internal components of an electric vehicle may be referred to as an EV power circuit (EV power circuit, EVPC) or a vehicle assembly (Vehicle Assembly, VA), and EVPC or a vehicle assembly may refer to a meaning defined above.

An electric vehicle charging system may include a conductive charging system using a cable or a non-contact wireless power transfer system, but is not limited thereto. An electric vehicle charging system may be defined as a system that charges a battery 12 mounted in an electric vehicle 10 by using power of a distribution network (grid, 30) of a commercial power source or an energy storage device, and such an electric vehicle charging system may have various forms depending on a type of an electric vehicle 10.

For example, SAE TIR J2954, which is a representative standard for wireless charging, establishes industry standard specification guidelines defining interoperability, electromagnetic compatibility, minimum performance, safety, and acceptable criteria for testing for wireless charging of light-duty electric and plug-in electric vehicles. It will be clearly understood by those skilled in the art that similar guidelines may be applied to a wired charging system.

A wired/wireless charging system of an electric vehicle may include largely the following three elements.
GA coil for power connection and grid-connected power converter, communication link with a vehicle system
VA coil having rectification and filtering components and charging control power electronics for regulation/safety/shutdown when necessary, and a communication link with a base station side
a secondary energy storage system, battery management system components, and related modules required for in-vehicle communication (CAN, LIN) required for battery SOC, charge rate, and other necessary information
In addition, since detailed information such as maximum charging power is not included in a VSE field of WLAN, in a charging station in which one SECC and a plurality of EVSE coexist, a user may not be properly connected to a charger intended to be actually charged.

In addition, after WLAN association between a vehicle and a charger/SECC, a positioning procedure should be performed for precise alignment between a vehicle and EVSE, and in a case of wireless charging (WPT), when alignment between a vehicle-side pad and an EVSE pad is not properly achieved, charging efficiency is reduced or charging may become impossible. In addition, when positioning is completed, a procedure for checking whether physical connection with EVSE intended to be actually connected is possible is required, and when a vehicle is not physically connectable to EVSE intended for charging, charging cannot be performed, and thus, after WLAN association, a pairing procedure should be performed between a vehicle and EVSE. For this purpose, in wireless charging, a method for positioning and pairing using a separate P2PS (Point to Point Signal) is defined in IEC 61950-2 standard, but in a robot charging system based on an automatic connection device (ACD), there is room for improvement such as insufficient standard regulations for a separate positioning and pairing method.

Power transfer may be performed from a transmission coil/primary coil (L1) to a receiving coil/secondary coil (L2), and at this time, a resonance frequency of a transmission coil L1 and a receiving coil L2 may be configured to be similar or identical to each other, and a receiving coil L2 may be configured to be positioned at a short distance in an electromagnetic field generated from a transmission coil L1.

Meanwhile, as a transmission coil L1 and a receiving coil L2 are positioned farther apart, power loss may increase, and thus, setting positions of both coils may be an important factor.

At this time, a transmission coil L1 may be included in a power transmitting device/pad, and a receiving coil L2 may be included in a power receiving device/pad. In addition, a transmission coil may also be referred to as a primary coil or a GA coil (Ground Assembly coil), and a receiving coil may also be referred to as a secondary coil or a VA coil (Vehicle Assembly coil). Accordingly, positioning between a power transmitting device/pad and a power receiving device/pad or positioning between an electric vehicle 10 and a power transmitting device/pad may also be an important factor.

Alignment between a power transmitting device/pad and a power receiving device/pad included in an electric vehicle 10 in FIG. 1 may correspond to alignment described above, and thus may be defined as alignment between SPC/GA and EVPC/VA, and is not limited to interpretation as alignment between a power transmitting device/pad and a power receiving device/pad.

Exemplary embodiments may include a separate cover for an inlet that is a charging socket arranged in a vehicle. When an inlet cover is arranged inside a charging door/port, the inlet cover may be implemented with a plastic or rubber material for insulation.

A charging manipulator may be various types of devices referred to as an ACD (Automated connection device, Automatic Charging Device, Autoconnect Charging Device), or may include ACD.

Examples of a charging manipulator may be applied to an ACD-S (Side) type, an ACD-U (Underbody) type, or an ACD-R (Roof) type.

In exemplary embodiments of the present disclosure, an operation range of a charging manipulator may refer to an ACD mating space (ACD mating space). In an alternative exemplary embodiment of the present disclosure, an operation range of a charging manipulator may refer to a range of a space in which a movable distance of a charging manipulator and an ACD mating space (ACD mating space) are combined.

In exemplary embodiments of the present disclosure, a process of identifying a type and specifications of an electric vehicle 10 may be included. At this time, an operation range of a charging manipulator may be adjusted in consideration of an operation range of a manipulator on an electric vehicle 10 side that is an ACD counterpart (ACD counterpart), and whether mating is possible may be determined.

A wireless power transfer system of FIG. 1 is generally known to use inductive coupling, and a power transfer system according to exemplary embodiments of the present disclosure may adopt a configuration in which power is transmitted by inductive coupling on the premise of an environment in which a gap between a transmission pad and a receiving pad is controlled within a predetermined range. At this time, a configuration of FIG. 1 may be used within a range corresponding to an object of the present disclosure, and may be selectively used or appropriately modified as necessary.

In ISO 15118-8, which is an international standard related to wireless communication for electric vehicle charging, a vehicle is allowed to be connected to a charger AP rather than a general AP through a VSE (Vendor Specific Element) field of a MAC frame corresponding to Layer 2 of an OSI 7 layer. However, since information on positioning and pairing is not properly defined in a VSE field of a charger/SECC except for wireless power transfer (WPT), in a charging manipulator system based on an automatic connection device (ACD) such as an ACD-U (Underbody) type or an ACD-S (Side) type, various positioning and communication techniques may be applied for precise positioning and pairing through positioning.

An on-board vehicle power supply circuit mounted in an electric vehicle 10 may include a battery 12 as a load.

A power receiving pad/device 11 mounted in an electric vehicle 10 may receive power through a secondary coil and may deliver power to a battery 12.

An electric vehicle charging station is illustrated as a part of EVSE for supplying power to an electric vehicle 10. A charging station is electrically connected to an ACD station, and power may be transmitted to a vehicle through a connector of an ACD station.

A primary coil on an EVSE side and a secondary coil on an electric vehicle 10 side may be close to each other to form inductive coupling.

In an ACD-U type electric vehicle wireless charging system according to exemplary embodiments of the present disclosure, an ACD station is located under an electric vehicle 10, and such a structure may be collectively referred to as an ACD-U type.

According to exemplary embodiments, a connector on an ACD side may be controlled to protrude from a station to approach a vehicle side. At this time, a connector may be connected and controlled by a robot arm.

According to exemplary embodiments, a connector on a vehicle side may be controlled to protrude from a vehicle side to approach a connector on an ACD side. At this time, a connector on a vehicle side may be connected and controlled by a robot arm.

In an ACD-S type electric vehicle wireless charging system according to exemplary embodiments of the present disclosure, an ACD station is located beside an electric vehicle 10, and such a structure may be collectively referred to as an ACD-S type.

According to exemplary embodiments, a connector on an ACD side may be controlled to protrude from a station to approach a vehicle side. At this time, a connector may be connected and controlled by a robot arm.

According to exemplary embodiments, a connector on a vehicle side may be controlled to protrude from a vehicle side to approach a connector on an ACD side. At this time, a connector on a vehicle side may be connected and controlled by a robot arm.

As a coordinate system applicable to exemplary embodiments of the present disclosure, an x-axis, y-axis, and z-axis coordinate system defined in SAE J2954 may be referred to.

In exemplary embodiments of the present disclosure, in a right-handed coordinate system, a front direction or a longitudinal direction of a vehicle may be defined as a +/-X axis direction. In addition, a driver side for a left-hand side vehicle or a lateral direction of a vehicle may be defined as a +/-Y axis direction. In addition, an upper direction or a vertical direction of a vehicle may be defined as a Z axis.

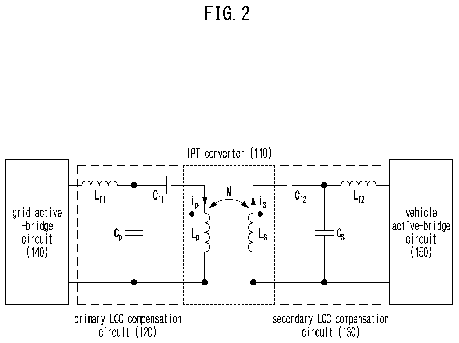

FIG. 2 is a diagram conceptually illustrating exemplary embodiments of a wireless power transfer system including a double-sided inductor-capacitor-capacitor (DS-LCC, Double-Sided LCC) compensation circuit.

Referring to FIG. 2, a wireless power transfer system may include a grid active-bridge circuit 140 connected to a grid 30 side.

A primary inductor-capacitor-capacitor (LCC) compensation circuit 120 is arranged between the grid active-bridge circuit 140 and an IPT converter 110, and may compensate for a difference in phase, etc.

The IPT converter 110 may deliver power on a grid 30 side to a battery 12 by using inductive coupling.

A vehicle active-bridge circuit 150 may deliver power received from the IPT converter 110 to a battery 12 or to a charger for charging a battery 12.

A secondary LCC compensation circuit 130 is arranged between the IPT converter 110 and the vehicle active-bridge circuit 150, and may compensate for a difference in phase, etc.

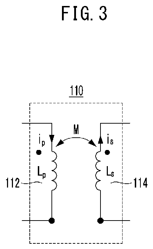

FIG. 3 is a diagram conceptually illustrating exemplary embodiments of an induced power transfer (IPT, Induced Power Transfer) converter of FIG. 2.

Referring to FIG. 2 and FIG. 3 together, a primary-side circuit arranged in EVSE may include a grid active-bridge circuit 140, a primary LCC compensation circuit 120, and a primary coil 112.

A secondary-side circuit mounted in an electric vehicle 10 may include a secondary coil 114, a secondary LCC compensation circuit 130, and a vehicle active-bridge circuit 150.

At an end of the primary-side circuit, a magnetic core of a primary side and a primary coil 112 are arranged. At a front end of the secondary-side circuit, a magnetic core of a secondary side and a secondary coil 114 are arranged.

A wireless power transfer system including an IPT converter 110 in which power is transmitted wirelessly may be implemented by forming inductive coupling among a magnetic core of a primary side, a primary coil 112, a magnetic core of a secondary side, and a secondary coil 114.

In the primary-side circuit, a DC/AC converter converting a DC voltage source into a voltage source for inducing a magnetic field may be included as a part of the grid active-bridge circuit 140.

In the primary-side circuit and/or the secondary-side circuit, a compensation circuit for compensating leakage inductance due to a large gap may be included as a primary/secondary LCC compensation circuit 120, 130.

In the secondary-side circuit, an AC/DC converter or a rectifier converting an AC current into a DC current may be included as a part of the vehicle active-bridge circuit 150.

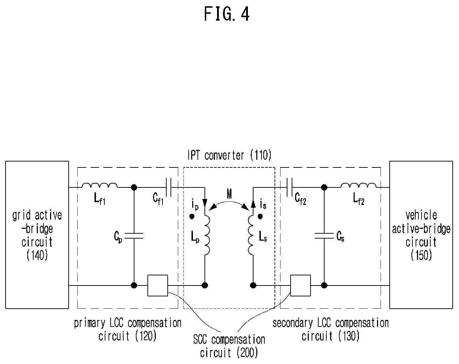

FIG. 4 is a diagram conceptually illustrating a wireless power transfer system including a DS-LCC compensation circuit 120, 130 according to exemplary embodiments of the present disclosure.

The wireless power transfer system of FIG. 4 discloses exemplary embodiments including a switching-controlled capacitor (SCC) compensation circuit 200 as an LCC compensation circuit 120, 130 that is robust to a change in an effective impedance that may occur based on an alignment error between a primary coil 112 and a secondary coil 114.

In description of components of FIG. 4, description overlapping with components of FIG. 2 is omitted.

Referring to FIG. 4, according to exemplary embodiments of the present disclosure, a power receiving device arranged in an electric vehicle 10, a chargeable mobility, or a chargeable device and receiving power from an electric vehicle supply equipment (EVSE) or a primary device may include a secondary coil 114; and a secondary inductor-capacitor-capacitor (LCC) compensation circuit 130 that delivers power transmitted from the secondary coil 114 to a charger.

According to exemplary embodiments of the present disclosure, in a power receiving device arranged in an electric vehicle 10, a secondary inductor-capacitor-capacitor compensation circuit 130 may include one or more switching-controlled capacitor (SCC) compensation circuits 200.

According to exemplary embodiments of the present disclosure, in a power receiving device arranged in an electric vehicle 10, one or more switching-controlled capacitor compensation circuits 200 may be connected in series or in parallel with one or more of passive elements in the secondary inductor-capacitor-capacitor compensation circuit 130.

According to exemplary embodiments of the present disclosure, in a power receiving device arranged in an electric vehicle 10, one or more switching-controlled capacitor compensation circuits 200 may include a switching-controlled capacitor; and a control switch connected in series with the switching-controlled capacitor and operated by a switching control signal.

According to exemplary embodiments of the present disclosure, in a power receiving device arranged in an electric vehicle 10, one or more switching-controlled capacitor compensation circuits 200 may provide an impedance that varies based on a duty cycle of a control switch.

According to exemplary embodiments of the present disclosure, in a power receiving device arranged in an electric vehicle 10, a switching control signal may be a pulse-based control signal. The pulse-based control signal may be a control signal to which one or more of a pulse width modulation (PWM) signal, a pulse frequency modulation (PFM) signal, etc. is applied.

According to exemplary embodiments of the present disclosure, in a power receiving device arranged in an electric vehicle 10, an operating condition of one or more switching-controlled capacitor compensation circuits 200 may be determined based on a change in an effective impedance characteristic of a secondary coil 114 according to a separation distance between a primary coil 112 on a power transmitting device side of an electric vehicle supply equipment and a secondary coil 114.

At this time, the effective impedance characteristic of the secondary coil 114 may refer to an actual impedance appearing as conditions such as a coupling coefficient are applied according to an actual separation distance, separately from a nominal inductance of a coil.

According to exemplary embodiments of the present disclosure, in a power receiving device arranged in an electric vehicle 10, an operating condition of one or more switching-controlled capacitor compensation circuits 200 may be determined based on whether an operation mode is a grid-to-vehicle (V2G) power transfer mode in which a secondary coil 114 receives power or a vehicle-to-grid (G2V) power transfer mode in which power is transmitted from a secondary coil 114.

In a G2V mode, power is transmitted from a primary coil 112 to a secondary coil 114 according to a normal role, whereas in a V2G mode, power is transmitted from a secondary coil 114 to a primary coil 112 contrary to a normal role, and thus, an operating condition of each SCC compensation circuit 200 may be differently determined according to whether a power transfer direction is a G2V mode or a V2G mode.

According to exemplary embodiments of the present disclosure, in a power receiving device arranged in an electric vehicle 10, an operating condition of one or more switching-controlled capacitor compensation circuits 200 may be determined based on whether one or more transmission switching-controlled capacitor compensation circuits 200 are included in a transmission (or primary) inductor-capacitor-capacitor compensation circuit 120 on a power transmitting device side of an electric vehicle supply equipment.

According to exemplary embodiments of the present disclosure, in a power receiving device arranged in an electric vehicle 10, an operating condition of one or more switching-controlled capacitor compensation circuits 200 may be determined based on one or more of a topology of one or more transmission switching-controlled capacitor compensation circuits 200 included in a transmission (or primary) inductor-capacitor-capacitor compensation circuit 120 on a power transmitting device side of an electric vehicle supply equipment or a topology of one or more switching-controlled capacitor compensation circuits 200 included in a secondary LCC compensation circuit 130.

According to exemplary embodiments of the present disclosure, a power transmitting device associated with an electric vehicle supply equipment (EVSE) or a primary device and transmitting power to an electric vehicle, a chargeable mobility, or a chargeable device may include a primary coil 112 (primary coil); and a primary inductor-capacitor-capacitor (LCC) compensation circuit 120 that delivers power from a power grid 30 to the primary coil 112.

According to exemplary embodiments of the present disclosure, in a power transmitting device associated with EVSE, the primary inductor-capacitor-capacitor compensation circuit 120 may include one or more switching-controlled capacitor (SCC) compensation circuits 200.

According to exemplary embodiments of the present disclosure, in a power transmitting device associated with EVSE, one or more switching-controlled capacitor compensation circuits 200 may be connected in series or in parallel with one or more of passive elements in the primary inductor-capacitor-capacitor compensation circuit 120.

According to exemplary embodiments of the present disclosure, in a power transmitting device associated with EVSE, one or more switching-controlled capacitor compensation circuits 200 may include a switching-controlled capacitor; and a control switch connected in series with the switching-controlled capacitor and operated by a switching control signal.

Referring again to FIG. 4, the primary LCC compensation circuit 120 may include three passive elements. The three passive elements may include a capacitor C_{f1} adjacent to a primary coil 112 side. In addition, an inductor L_{f1} disposed at an opposite side of the capacitor C_{f1}, that is, at a position farthest from the primary coil 112, may be included. A capacitor Cₚ may be disposed between a node between the capacitor C_{f1} and the inductor L_{f1} and a reference node.

An inductance of the primary coil 112 is given as Lₚ, and a primary-side current flowing through the primary coil 112 may be represented by ip.

The secondary LCC compensation circuit 130 may also include three passive elements. The three passive elements may include a capacitor C_{f2} adjacent to a secondary coil 114 side. In addition, an inductor L_{f2} disposed at an opposite side of the capacitor C_{f2}, that is, at a position farthest from the secondary coil 114, may be included. A capacitor Cs may be disposed between a node between the capacitor C_{f2} and the inductor L_{f2} and a reference node.

An inductance of the secondary coil 112 is given as Ls, and a secondary-side current flowing through the secondary coil 114 may be represented by is.

The DS-LCC compensation circuits 120, 130 illustrated in FIG. 4 may be disposed to have a symmetrical relationship with an IPT converter 110 interposed therebetween. Meanwhile, although an SCC compensation circuit 200 is illustrated in FIG. 4 as being disposed between the primary coil 112 and the capacitor Cₚ and between the secondary coil 114 and the capacitor Cs, this is merely one exemplary embodiment of the present disclosure.

An SCC compensation circuit according to another exemplary embodiment of the present disclosure may be connected in series with or in parallel with one or more of passive elements included in the DS-LCC compensation circuits 120, 130. For example, an SCC compensation circuit may be connected at a series position or a parallel position with respect to each of the capacitor C_{f1}, the inductor L_{f1}, and the capacitor Cₚ in the primary LCC compensation circuit 120. Likewise, an SCC compensation circuit may be connected at a series position or a parallel position with respect to each of the capacitor C_{f2}, the inductor L_{f2}, and the capacitor Cs in the secondary LCC compensation circuit 130.

In various exemplary embodiments of the present disclosure, a topology of an SCC compensation circuit may refer to positions of passive elements of DS-LCC compensation circuits 120, 130 to which an SCC compensation circuit is connected. For example, in exemplary embodiments illustrated in FIG. 4, it may be interpreted that an SCC compensation circuit 200 is connected in series with a capacitor C_{f1} in a primary LCC compensation circuit 120 and is connected in series with a capacitor C_{f2} in a secondary LCC compensation circuit 130. At this time, a topology of an SCC compensation circuit 200 may refer to positions of the capacitor C_{f1} and the capacitor C_{f2} in the DS-LCC compensation circuits 120, 130.

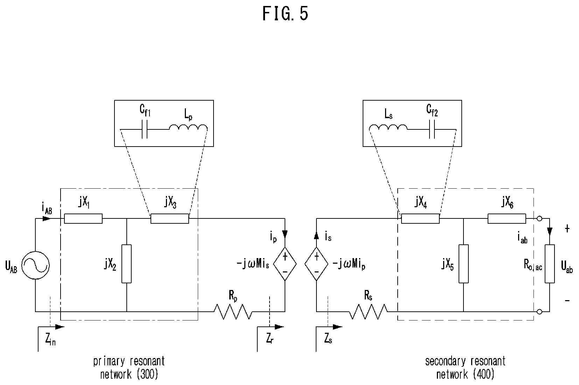

FIG. 5 is a diagram conceptually illustrating an equivalent circuit of a wireless power transfer system including DS-LCC compensation circuits 120, 130 according to exemplary embodiments of the present disclosure.

Referring to FIG. 5, an equivalent circuit may include a primary resonant network 300 on a primary side and a secondary resonant network 400 on a secondary side.

In exemplary embodiments of the present disclosure, a primary LCC compensation circuit 120 and a primary coil 112 of FIG. 4 may be combined and may be represented in the equivalent circuit as a component of jX₃ of the primary resonant network 300. Referring to FIG. 5, for convenience of description, a reactance X₃ may be represented as a combined impedance of a circuit in which a capacitor C_{f1} and a primary coil 112 Lₚ are connected in series.

Likewise, in exemplary embodiments of the present disclosure, a secondary LCC compensation circuit 130 and a secondary coil 114 of FIG. 4 may be combined and may be represented in the equivalent circuit as a component of jX₄ of the secondary resonant network 400. Referring to FIG. 5, for convenience of description, a reactance X₄ may be represented as a combined impedance of a circuit in which a capacitor C_{f2} and a secondary coil 114 Ls are connected in series.

Referring to FIG. 5, since an impedance of the equivalent circuit varies according to an operating frequency ω, adjustment of an operating frequency ω may be determined as one of operating conditions of a wireless power transfer system for impedance matching and efficient output control.

By introducing the equivalent circuit of FIG. 5, a topology of an SCC compensation circuit may be represented more simply. For example, a topology of an SCC compensation circuit 200 illustrated in FIG. 4 may be represented, referring to FIG. 5, as positions of a capacitor C_{f1} and a capacitor C_{f2} in the equivalent circuit, that is, X₃ and X₄.

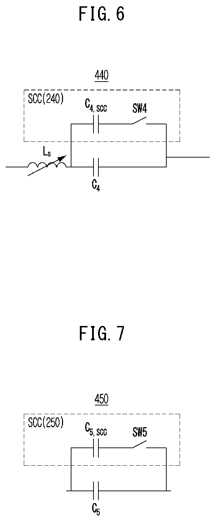

FIG. 6 is a diagram conceptually illustrating exemplary embodiments of a switching-controlled capacitor (SCC) included as a part of a DS-LCC compensation circuit according to exemplary embodiments of the present disclosure.

Referring to FIG. 6, exemplary embodiments in which an SCC compensation circuit 240 is arranged at a position of a fourth reactance X₄ in the equivalent circuit of FIG. 5 is illustrated. An equivalent circuit 440 of an updated fourth reactance is illustrated in FIG. 6 by inclusion of an SCC compensation circuit 240.

In order to simplify display for convenience of description, a capacitor C_{f2} of FIG. 4 is denoted as C4 in FIG. 6. An SCC compensation circuit 240 connected in parallel with C4 may include a switching-controlled capacitor C4,SCC and a control switch SW4. The switching-controlled capacitor C4,SCC and the control switch SW4 may be connected in series with each other.

In FIG. 6, an inductance Ls of a secondary coil 114 is indicated as a variable inductance based on an intention to represent an effective impedance that varies based on a separation distance between a primary coil 112 and a secondary coil 114.

Exemplary embodiments illustrated in FIG. 6 may be applied to X₃ having a topology symmetrical to X₄ based on symmetry of DS-LCC compensation circuits 120, 130. At this time, the exemplary embodiment of FIG. 6 may be appropriately modified based on symmetry and may be applied to X₃.

FIG. 7 is a diagram conceptually illustrating exemplary embodiments of a switching-controlled capacitor (SCC) included as a part of a DS-LCC compensation circuit according to exemplary embodiments of the present disclosure.

Referring to FIG. 7, exemplary embodiments in which an SCC compensation circuit 250 is arranged at a position of a fifth reactance X₅ in the equivalent circuit of FIG. 5 are illustrated. An equivalent circuit 450 of an updated fifth reactance is illustrated in FIG. 7 by inclusion of an SCC compensation circuit 250.

In order to simplify display for convenience of description, a capacitor Cs of FIG. 4 is denoted as C5 in FIG. 7. An SCC compensation circuit 250 connected in parallel with C5 may include a switching-controlled capacitor C5,SCC and a control switch SW5. The switching-controlled capacitor C5,SCC and the control switch SW5 may be connected in series with each other.

Exemplary embodiment illustrated in FIG. 7 may be applied to X₂ having a topology symmetrical to X₅ based on symmetry of DS-LCC compensation circuits 120, 130. At this time, the exemplary embodiment of FIG. 7 may be appropriately modified based on symmetry and may be applied to X₂.

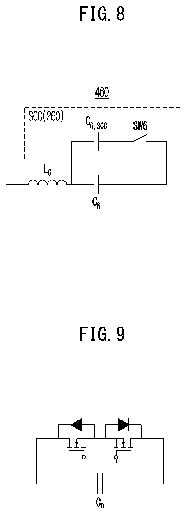

FIG. 8 is a diagram conceptually illustrating exemplary embodiments of a switching-controlled capacitor (SCC) included as a part of a DS-LCC compensation circuit according to exemplary embodiments of the present disclosure.

Referring to FIG. 8, exemplary embodiments in which an SCC compensation circuit 260 is arranged at a position of a sixth reactance X₆ in the equivalent circuit of FIG. 5 are illustrated. An equivalent circuit 460 of an updated sixth reactance is illustrated in FIG. 8 by inclusion of an SCC compensation circuit 260.

In order to simplify display for convenience of description, an inductor L_{f2} of FIG. 4 is denoted as L₆ and C6 in FIG. 8. An SCC compensation circuit 260 connected in series with L₆ and connected in parallel with C6 may include a switching-controlled capacitor C_{6,SCC} and a control switch SW6. The switching-controlled capacitor C_{6,SCC} and the control switch SW6 may be connected in series with each other.

Exemplary embodiment illustrated in FIG. 8 may be applied to X₁ having a topology symmetrical to X₆ based on symmetry of DS-LCC compensation circuits 120, 130. At this time, the exemplary embodiment of FIG. 8 may be appropriately modified based on symmetry and may be applied to X₁.

FIG. 9 is a diagram conceptually illustrating a switching-controlled capacitor (SCC) circuit according to exemplary embodiments of the present disclosure.

Referring to FIG. 9, an SCC circuit may be implemented by a capacitor Cn and a plurality of switches.

FIG. 9 is merely one exemplary embodiment for implementing an SCC circuit of the present disclosure, and a spirit of the present disclosure is not limited to a specific exemplary embodiment.

Referring to FIG. 4 to FIG. 9 together, operating conditions of exemplary embodiments of the present disclosure may be interpreted and determined as follows.

According to exemplary embodiments of the present disclosure, in a system for supplying power from a power supply device or an electric vehicle supply equipment (EVSE, Electric Vehicle Supply Equipment) to an electric vehicle, an efficient power transmission control technique based on inductive coupling between a power transmitting device and a power receiving device and input/output characteristics may be implemented when a bidirectional charging mode is provided.

According to exemplary embodiments of the present disclosure, in power transmission between a power transmitting device and a power receiving device supporting a bidirectional charging mode, a method for determining an operating frequency for achieving a rated output and zero voltage switching (ZVS, Zero Voltage Switching), implementing a compensation circuit, and/or determining an operating mode of a compensation circuit may be implemented.

According to exemplary embodiments of the present disclosure, in power transmission between a power transmitting device and a power receiving device supporting a bidirectional charging mode, a compensation circuit structure for impedance phase margin compensation and output characteristic control may be proposed, and an operation method of the compensation circuit may be implemented.

According to exemplary embodiments of the present disclosure, in power transmission between a power transmitting device and a power receiving device supporting a bidirectional charging mode, an operation mode of wireless power transfer may be determined with reference to a separation distance between a primary coil and a secondary coil, input/output characteristics, whether an SCC compensation circuit is included in each of a primary-side LCC compensation circuit and a secondary-side LCC compensation circuit, whether SCC compensation circuits on both sides are symmetrical when an SCC compensation circuit is included in at least one of a primary-side LCC compensation circuit and a secondary-side LCC compensation circuit, a topology of an SCC compensation circuit or SCC compensation circuits when an SCC compensation circuit is included in at least one of a primary-side LCC compensation circuit and a secondary-side LCC compensation circuit, etc.

The present disclosure relates to a wireless power transfer system capable of providing bidirectional operation satisfying a rated output and an impedance phase margin by attaching an SCC that compensates a variation of a mutual inductance value and a variation of a reactance component of an entire circuit due to a separation distance during bidirectional power transfer operation according to a user requirement.

In a bidirectional wireless charging system for EV, a phase impedance margin varies according to a separation distance between a transmission pad and a reception pad 21, 11 and input/output characteristics.

In an EV wireless charging system, after confirming an offset range of a separation distance between transmission/reception pads 11, 21 through a communication channel defined in SAE J2847/6 standard, processes such as pairing, power transfer, etc. may be performed.

In an EV wireless charging system, an operating frequency may be determined within a range of 79 to 90 kHz based on a standard proposed by an automotive technology association, and when transmitting 25% or more of a rated output after pairing, a frequency during charging cannot be changed. (An allowable tolerance range of an operating frequency is within 50 Hz.)

In transmission/reception pads 11, 21 of a wireless charging system, a problem may occur in which inductance characteristics of transmission/reception pads 11, 21 vary according to a power load and a phase varies. According to exemplary embodiments of the present disclosure, after confirming impedance characteristics according to a separation distance during exchange of input/output characteristic information and initial charging/discharging, an impedance margin may be compensated through an SCC compensation circuit in consideration of a variation range of pad inductance according to a load.

In a resonant network of a DS-LCC topology adopted in SAE J2954 that is an international standard, a compensation circuit may be included in each of a primary side and a secondary side.

In exemplary embodiments of the present disclosure, an impedance margin and/or output characteristics may be compensated by additionally including a switching capacitor circuit connected in series or in parallel with passive elements of a DS-LCC topology.

A universal GA compatible with WPT 1 to 3 standards may be designed to enable bidirectional power transfer suitable for specifications of reception pads having various rated levels by applying a switching capacitor.

Bidirectional operation technologies such as V2L (Vehicle to Load), V2G (Vehicle to Grid), etc. mounted in an EV may be bidirectional charging technologies using an on-board charger (On-Board Charger, OBC). A bidirectional converter using an OBC may operate bidirectionally through a PFC converter, an isolated converter (DAB, CLLC converter, etc.), and a rectifier by physically connecting single-phase or three-phase AC power to the OBC.

In general, an OBC converter may refer to a converter in which a coupling coefficient of a transformer constituting the converter is 0.9 or more, whereas a coupling coefficient between transmission/reception pads 11, 21 constituting a wireless charging system is less than 0.2 in most cases, and thus, there is a problem in that a design and control compensation method of an OBC converter is difficult to uniformly apply to bidirectional communication of a wireless charging system.

An international standard for an EV wireless charging system proposed by an automotive technology association is mainly proposed for a single-phase wireless charging system, and unlike a conventional resonant converter, output control through change of a switching frequency during operation is not sufficiently implemented.

An SCC or a variable inductor circuit used in a single-phase wireless charging system may be implemented for adjustment according to a separation distance position of a reception pad 11 and a rated power value.

A standard for a power converter circuit design considering bidirectional operation of an EV wireless charging system, or a method for compensating a required rating and an impedance phase margin during V2G operation, is not sufficiently implemented.

A standard for a V2G operation scheme according to reception pads 11 of various rated levels attached to an EV is also not sufficiently implemented.

Accordingly, there is a need for development of a wireless charging system capable of bidirectional operation according to reception pads 11 of various rated levels compatible with an EV.

In exemplary embodiments of the present disclosure, while maintaining a communication procedure of position between transmission/reception pads 11, 21 (that is, a position alignment result between a primary coil and a secondary coil) and input/output information of a conventional technology, during bidirectional operation, whether each SCC compensation circuit operates and an operating frequency may be determined based on information given through communication, and bidirectional wireless charging may be performed.

A known prior art unidirectional operation and ripple reduction rectifier circuit may be changed to a form of an active-bridge circuit in order to be applied to bidirectional charging operation.

An SCC compensation circuit may be arranged in one or more of three passive elements on a primary side of a DS-LCC topology, and may be arranged in one or more of three passive elements on a secondary side. Exemplary embodiments according to arrangement of an SCC compensation circuit may be provided as up to 64 different cases.

An SCC compensation circuit may be implemented by using a reactance change according to passive turn on/off of a control switch. Alternatively, an SCC compensation circuit may be controlled based on PWM/PFM.

By using operations of a plurality of SCC compensation circuits, a change in resonant reactance according to a separation distance between coils or between pads and rated output characteristics may be compensated, and a rated output may also be compensated.

During V2G operation, unlike G2V, output characteristics may be dominantly affected according to a battery state of charge (SoC). By using operations of a plurality of SCC compensation circuits, power according to a G2V mode considering a battery SoC and a rated level of a reception pad 11 may be supplied.

In a bidirectional operation mode, when a current phase leads according to harmonic components generated through duty ratio control and phase shift control of an inverter during rated output control, compensation may be performed by using an SCC compensation circuit.

An implementation of an SCC compensation circuit enabling constant rated output operation regardless of a separation distance and a battery SoC, and a control technique using the same, may be proposed.

Since power reception characteristics of a secondary side differ for each vehicle manufacturer, a method of using an SCC compensation circuit for robust wireless power transfer (WPT, Wireless Power Transfer) compatible with power reception characteristics of a secondary side may be proposed.

Table 1 and Table 2 below are tables summarizing some of exemplary embodiments of implementation of an SCC compensation circuit according to the present disclosure. In Table 1, topologies of SCC compensation circuits for each exemplary embodiment are illustrated, and in Table 2, compensation functions of SCC compensation circuits for each of G2V/V2G bidirectional modes for each exemplary embodiment are illustrated.

**[Table 1]**

| | Switching-controlled capacitor | | | | | |
|---|---|---|---|---|---|---|
| | X₁ | X₂ | X₃ | X₄ | X₅ | X₆ |
| Case 1 | | | | V | | |
| Case 2 | V | | | | | V |
| Case 3 | V | | V | V | | V |
| Case 4 | V | V | V | | | |
| Case 5 | | | | V | V | V |
| Case 6 | V | V | V | V | | |
| Case 7 | V | V | V | V | V | V |

**[Table 2]**

| | G2V mode | V2G mode |
|---|---|---|
| Case 1 | impedance phase margin compensation | impedance phase margin compensation |
| Case 2 | impedance phase margin compensation | impedance phase margin compensation |
| Case 3 | impedance phase margin compensation | impedance phase margin compensation |
| Case 4 | output characteristic control | impedance phase margin compensation output characteristic control |
| Case 5 | impedance phase margin compensation output characteristic control | impedance phase margin compensation output characteristic control |
| Case 6 | impedance phase margin compensation output characteristic control | output characteristic control |
| Case 7 | impedance phase margin compensation output characteristic control | impedance phase margin compensation output characteristic control |

A design and operation control process of an SCC compensation circuit included in a wireless charging system so that bidirectional operation is possible is disclosed. For convenience of calculation, an equivalent circuit of FIG. 5 may be used. The equivalent circuit of FIG. 5 may be referred to as a so-called 3-resonance component model. In order to achieve a rated output even in a wide separation distance range, a resonant network may be designed so that rated operation is possible even when a separation distance in a case of having a minimum coupling coefficient M is considered.

An operating frequency of an electrical signal through which power is transmitted is denoted by ω, and reactances X₁, X₂, X₃, X₄, X₅, and X₆ of the equivalent circuit illustrated in FIG. 5 may be referred to.

In the equivalent circuit, four reactances that are inductive reactances satisfy X₁, X₃, X₄, X₆ > 0, and these reactances satisfy a relationship of Xₙ = ωLₙ (n=1, 3, 4, 6).

In the equivalent circuit, two reactances that are capacitive reactances satisfy X₂, X₅ < 0, and a relationship of Xₘ = -1/(ωCₘ) (m=2, 5) is satisfied.

On the equivalent circuit, a relationship between an output current iab on a load side and a voltage UAB on a grid 30 side may be represented as following Equation 1 according to output current characteristics of a DS-LCC network.${i}_{ab} = \left(ω{MU}_{AB}\right) / \left({X}_{1}{X}_{6}\right)$

A condition for resonance to occur may be represented as following Equation 2.$\begin{matrix}{jX}_{1} + {jX}_{2} = 0 \\ {jX}_{2} + {jX}_{3} = 0 \\ {jX}_{4} + {jX}_{5} = 0 \\ {jX}_{5} + {jX}_{6} = 0\end{matrix}$

At this time, j is an imaginary unit, and impedance components that vary according to a separation distance are X₃ and X₄ including a primary coil and a secondary coil, and a mutual inductance M may also be included.

When X₃ and X₄ are expressed as values of passive elements, following Equation 3 may be obtained.$\begin{matrix}{jX}_{3} = 1 / \left({jωC}_{3}\right) + {jωL}_{p} \\ {jX}_{4} = 1 / \left({jωC}_{4}\right) + {jωL}_{s}\end{matrix}$

At this time, C₃ may be C_{f1}.

Reactances in an equivalent circuit of passive elements having impedance components independent of a separation distance are jX₁, jX₂, jX₅, and jX₆.

Among impedance components that vary with a separation distance, variations that actually affect operation of a circuit occur in a secondary-side circuit. Accordingly, compensation through variation of a reactance jX₄ associated with a secondary coil of a secondary-side circuit is relatively easy.

An equivalent impedance of a primary-side circuit has a resistance component and a reactance component that vary, and during impedance phase margin compensation, compensation through variation of jX₁ is relatively easy.

An equivalent impedance Zs of a secondary-side circuit illustrated in FIG. 5 may be represented as following Equation 4.${Z}_{s} = {jX}_{4} + \left[{{X}_{5}}^{2} {R}_{o , ac}+{jX}_{5}\left({{R}_{o , ac}}^{2}+{X}_{5}{X}_{6}+{{X}_{6}}^{2}\right)\right] / \left[{{R}_{o , ac}}^{2}+{\left({X}_{5}+{X}_{6}\right)}^{2}\right]$

A reflected impedance Zr illustrated in FIG. 5 may be represented as following Equation 5.$Zr = {\left(ωM\right)}^{2} / {Z}_{s}$

An equivalent impedance Zin of a primary-side circuit illustrated in FIG. 5 may be represented as following Equation 6.${Z}_{in} = {jX}_{1} + \left[{{X}_{2}}^{2} {Z}_{r}+{jX}_{2}\left({{Z}_{r}}^{2}+{X}_{2}{X}_{3}+{{X}_{3}}^{2}\right)\right] / \left[{{Z}_{r}}^{2}+{\left({X}_{2}+{X}_{3}\right)}^{2}\right]$

When it is assumed that a reactance component is adjusted to 0 by applying an SCC compensation circuit, current may be controlled by using jX₂, jX₃ SCC matching and jX₅, jX₆ SCC matching.

When it is assumed that jX₂ + jX₃ = 0 and jX₅ + jX₆ = 0 are satisfied through SCC matching, current for each mesh may be represented as following Equations 7 to 10.

In G2V mode operation, when jX₂, jX₃, jX₅, and jX₆ vary according to a separation distance, a resistance component and a reactance component vary together and a nonlinear characteristic may appear.${i}_{AB} = {U}_{AB} / {Z}_{in} = {U}_{AB} \left[{{Z}_{r}}^{2}+{\left({X}_{2}+{X}_{3}\right)}^{2}\right] / \left({{X}_{2}}^{2} {Z}_{r}\right) = {U}_{AB} {Z}_{r} / {{X}_{2}}^{2}$

At this time, iAB is an input current on a grid 30 side.$ip = {i}_{AB} {jX}_{2} / \left({jX}_{2}+{jX}_{3}+{Z}_{r}\right) = \left({U}_{AB}{Z}_{r} {jX}_{2}\right) / \left({{X}_{2}}^{2} {Z}_{r}\right) = {jU}_{AB} / {X}_{2}$

At this time, ip is a primary-side current formed in a primary coil.$is = jω {Mi}_{p} / {Z}_{s} = - ω {MU}_{AB} {R}_{o , ac} / {{X}_{5}}^{2} {X}_{2}$

At this time, is is a secondary-side current formed in a secondary coil.${i}_{ab} = {i}_{s} {jX}_{5} / \left({jX}_{5}+{jX}_{6}+{R}_{o , ac}\right) = - ω {MU}_{AB} / {X}_{5} {X}_{2}$

At this time, i_{ab} is an output current on a load side.

According to exemplary embodiments of the present disclosure (Case 1 of Table 1), a reactance variation due to a variation of an inductance component of a secondary coil may be compensated by applying an SCC compensation circuit 240 illustrated in FIG. 6 to an X₄ side.

When an updated inductance of a secondary coil reflecting an inductance variation according to a separation distance is denoted as Lₛ', an updated fourth reactance X₄' by compensation may be represented by following Equation 11.${jX}_{4} ′ = {jωL}_{s} ′ + 1 / \left({jωC}_{4 , SCC}\right)$

According to exemplary embodiments of the present disclosure (Case 2 of Table 1), output characteristic compensation and reactance variation may be compensated by applying an SCC compensation circuit 260 illustrated in FIG. 8 to X₁ and X₆ sides.

An updated first reactance X₁' and an updated sixth reactance X₆' by compensation may be represented by following Equation 12.$\begin{matrix}{jX}_{1} ′ = {jωL}_{1} + 1 / \left({jωC}_{1 , SCC}\right) \\ {jX}_{6} = {jωL}_{6} + 1 / \left({jωC}_{6 , SCC}\right) \\ {jX}_{6} ′ = {jωL}_{6}\end{matrix}$

By using control of Case 1 and Case 2 using Equations 11 and 12, ZVS operation may be achieved.

According to exemplary embodiments of the present disclosure (Case 3 of Table 1), impedance phase margin during bidirectional operation may be compensated by applying an SCC compensation circuit 260 illustrated in FIG. 8 to X₁ and X₆ sides and applying an SCC compensation circuit 240 illustrated in FIG. 6 to X₃ and X₄ sides.

During V2G operation, unlike G2V, following Equation 13 may be used.$\begin{matrix}{jX}_{6} = {jωL}_{6} + 1 / \left[jω\left({C}_{6}+{C}_{6 , SCC}\right)\right] \\ {jX}_{3} = {jωL}_{p} + 1 / \left[jω\left({C}_{3}+{C}_{3 , SCC}\right)\right]\end{matrix}$

For phase impedance compensation of bidirectional operation, exemplary embodiments including two SCC compensation circuits in a primary-side GA and two SCC compensation circuits in a secondary-side VA may be considered.

In a misaligned state between a primary coil and a secondary coil, a coil inductance variation occurs according to a load and a current flowing through a coil, and an SCC compensation circuit may be required to compensate for the variation.

An SCC compensation circuit may provide a capacitance change according to turn-on/turn-off and a capacitance change through PWM duty cycle control. At this time, a duty cycle is used as a conduction angle and may be expressed in degree or radian.

A phase shift of an input/output power converter may be controlled by using a circuit illustrated in FIG. 9. At this time, a soft switching region may be increased through application of SCC compensation.

At this time, a controlled capacitance of an SCC circuit may be represented as following Equation 14.${C}_{n , SCC} = {πC}_{n} / \left(2π-2α+sin 2α\right)$

At this time, π is a circular constant, and α is an SCC conduction angle.

In Case 3 of Table 1, when an impedance phase margin is compensated, only a resistive component remains in a circuit, and a circulating current may be minimized. This process may be implemented by using Equation 15 similarly to Equation 13.$\begin{matrix}{jX}_{1} = {jωL}_{1} + 1 / \left[jω\left({C}_{1}+{C}_{1 , SCC}\right)\right] \\ {jX}_{4} = {jωL}_{s} + 1 / \left[jω\left({C}_{4}+{C}_{4 , SCC}\right)\right]\end{matrix}$

By using Equation 4 and Equation 6, a minimum value min(Zₛ) of Zₛ and a real part Re{Zᵢₙ} of Zᵢₙ may be represented as following Equation 16. $\begin{matrix}min \left({Z}_{s}\right) = Re \left\{{Z}_{s}\right\} = {{X}_{5}}^{2} {R}_{o , ac} / \left[{{R}_{o , ac}}^{2}+{\left({X}_{5}+{X}_{6}\right)}^{2}\right] \\ Re \left\{{Z}_{in}\right\} = {{X}_{2}}^{2} {Z}_{r} / \left[{{Z}_{r}}^{2}+{\left({X}_{2}+{X}_{3}\right)}^{2}\right]\end{matrix}$

According to exemplary embodiments of the present disclosure (Case 4 of Table 1), exemplary embodiments in which three SCC compensation circuits are applied to a primary-side LCC compensation circuit are disclosed when addition of SCC on a vehicle side is difficult or when an SCC compensation circuit is not arranged on a vehicle side.

At this time, an impedance phase margin may be compensated by arranging SCC compensation circuits at X₁, X₂, and X₃.

When a phase margin is compensated, compensation of a primary-side reactance component may be controlled by using SCC compensation circuits of X₁ and X₂. In addition, output characteristics may be controlled by controlling variation of a resonant tank by using SCC compensation circuits of X₁, X₂, and X₃.

At this time, following Equation 17 may be obtained by using conditions of X₁ + X₂ = 0 and X₂ + X₃ = 0 of Equation 2.${i}_{AB} / {i}_{p} = - 1 / \left({ωX}_{2}\right) = {ωX}_{1}$

In Case 4, during V2G operation, output characteristics according to a separation distance variation may be compensated. In addition, output characteristics may be controlled by controlling variation of a resonant tank and responding to a reduction in output characteristics.

According to exemplary embodiments of the present disclosure (Case 5 of Table 1), an impedance phase margin and output characteristics may be compensated by using a vehicle-side SCC topology.

At this time, an impedance phase margin may be compensated by arranging SCC compensation circuits at X₄, X₅, and X₆.

Case 5 may control an operation mode in a manner similar to Case 4.

At this time, following Equation 18 may be obtained by using conditions of X₄ + X₅ = 0 and X₅ + X₆ = 0 of Equation 2.${i}_{s} / {i}_{ab} = {ωX}_{6} {{X}_{1}}^{2}$

According to exemplary embodiments of the present disclosure (Case 6 of Table 1), impedance phase margin compensation and output characteristic control during bidirectional operation may be achieved by using an SCC topology on the vehicle side at X₄ and SCC topologies on the primary side at X₁, X₂, and X₃.

Case 6 may exhibit characteristics similar to a combination of Case 1 and Case 4.

Variation in inductance of a secondary coil may be compensated by using an SCC compensation circuit connected in series with the secondary coil and the X₄ side.

In addition, output characteristic control and reactance margin compensation may be achieved by using SCC compensation circuits arranged at X₁, X₂, and X₃.

According to exemplary embodiments of the present disclosure (Case 7 of Table 1), impedance phase margin compensation and output characteristic control during bidirectional operation may be achieved by using SCC topologies on the vehicle side at X₄, X₅, and X₆ and SCC topologies on the primary side at X₁, X₂, and X₃.

In Case 7, operations of Cases 1 to 6 described above may be performed.

In Case 7, output characteristics may be controlled through control of an LCC resonant tank according to load requirements, and impedance phase margin may be compensated.

The embodiments of Table 1 have mainly disclosed cases in which SCC compensation circuits on the primary side and the secondary side are designed to have symmetry, or cases in which SCC compensation circuits are concentrated on either the primary side or the secondary side. These embodiments are selected for simplicity of calculation and convenience of explanation, and the technical spirit of the present disclosure is not limited to these specific embodiments, and various other embodiments based on different combinations of SCC compensation circuits may be implemented.

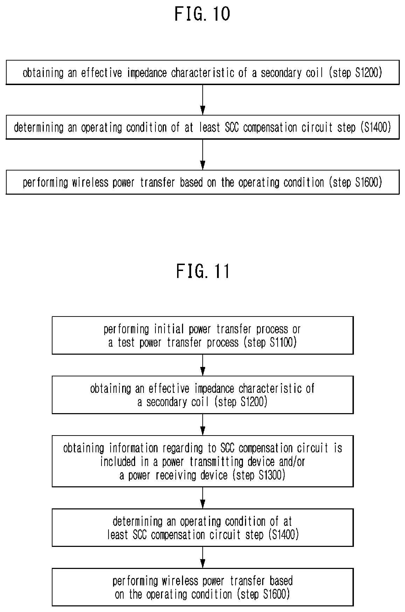

FIG. 10 is a flowchart illustrating a wireless power transfer method according to exemplary embodiments of the present disclosure.

Referring to FIG. 10, the power transfer method according to exemplary embodiments of the present disclosure may include: obtaining (step S1200) an effective impedance characteristic of a secondary coil 114 included in a power receiving apparatus that is disposed in a chargeable mobility or device and receives power from an electric vehicle supply equipment (EVSE) or a primary device; determining (step S1400) an operating condition of at least one switching-controlled capacitor (SCC) compensation circuit 200 in a secondary inductor-capacitor-capacitor (LCC) compensation circuit 130 that transfers power delivered from the secondary coil 114 to a charger, based on the effective impedance characteristic of the secondary coil 114; and performing (step S1600) wireless power transfer by inductive coupling of the secondary coil 114 based on the operating condition.

In determining (step S1400) the operating condition of the at least one SCC compensation circuit 200, the operating condition may be determined based on a change in the effective impedance characteristic of the secondary coil 114 according to a separation distance between a primary coil 112 on a power transmitting device side of the EVSE and the secondary coil 114.

As described above, an effective impedance and an actual inductance of the secondary coil 114 may vary depending on the separation distance, and the operating condition of the SCC compensation circuit 200 may be determined based thereon. This process may involve impedance matching based on the above-described equations, determination of a PWM duty, and determination of an operating frequency.

In determining (step S1400) the operating condition of the at least one SCC compensation circuit 200, the operating condition may be determined based on whether an operation mode is a grid-to-vehicle (G2V) power transfer mode in which the secondary coil 114 receives power or a vehicle-to-grid (V2G) power transfer mode in which power is transmitted from the secondary coil 114.

Conditions applied in the V2G mode and the G2V mode may be different, and in the embodiment of the present disclosure, the process of determining the operating condition of the SCC compensation circuit 200 for each condition, that is, impedance matching based on the above-described equations, determination of a PWM duty, and determination of an operating frequency, may be involved.

In determining (step S1400) the operating condition of the at least one SCC compensation circuit 200, the operating condition may be determined based on whether at least one transmitting SCC compensation circuit 200 is included in a primary inductor-capacitor-capacitor (LCC) compensation circuit 120 on the power transmitting device side of the EVSE.

In the embodiments of Table 1 described above, Cases 1 and 5 include SCC compensation circuits only on the vehicle side, Case 4 includes SCC compensation circuits only on the EVSE side, and Cases 2, 3, 6, and 7 include SCC compensation circuits on both the vehicle and EVSE sides. After identifying these cases, an appropriate operating condition may be determined.

In determining (step S1400) the operating condition of the at least one SCC compensation circuit 200, the operating condition may be determined based on at least one of a topology of at least one transmitting SCC compensation circuit included in the primary LCC compensation circuit on the power transmitting device side of the EVSE or a topology of the at least one SCC compensation circuit.

In the embodiments of Table 1 described above, since mathematical conditions applied to each of Cases 1 to 7 are different based on a topology of passive elements in which SCC compensation circuits are arranged, an appropriate operating condition may be determined after the topology is identified.

In performing (step S1600) wireless power transfer by inductive coupling of the secondary coil 114 based on the operating condition, a variable impedance based on a duty cycle of a control switch may be provided by controlling the duty cycle of the control switch, which is connected in series with a switching-controlled capacitor in at least one SCC compensation circuit 200, by a switching control signal.

In an alternative embodiment of the present disclosure, even when a plurality of SCC compensation circuits are arranged in hardware, only some of the SCC compensation circuits may be activated based on an alignment state of coils, a required output rating, whether SCC compensation circuits are arranged on a vehicle side and an EVSE side, and a topology.

For example, when SCC compensation circuits are arranged at all three passive elements of an LCC compensation circuit on an EVSE side, and an SCC compensation circuit SCC6 is arranged only at a position X₆ of an LCC compensation circuit on a vehicle side, an operation mode may be selected as Case 2 of Table 1 by activating only SCC1 at a position X₁ among the SCC compensation circuits on the EVSE side.

Alternatively, in the above case, when performance of SCC6 on the vehicle side is determined to be insufficient, Case 4 may be selected so that only SCC compensation circuits on the EVSE side are activated while SCC6 on the vehicle side is deactivated.

Such selection of activation/deactivation or determination of an operation mode may be performed through cooperation between the vehicle and the EVSE, and in some cases may be determined by the EVSE or by the vehicle.

FIG. 11 is a flowchart illustrating a wireless power transfer method according to exemplary embodiments of the present disclosure.

Referring to FIG. 11, in obtaining (step S1200) an effective impedance characteristic of a secondary coil, the effective impedance characteristic of the secondary coil may be obtained based on data collected through an initial power transfer process or a test power transfer process (step S1100).

The power transfer method according to exemplary embodiments of the present disclosure may further include, before the determining of the operating condition of at least one SCC compensation circuit, obtaining (step S1300) whether at least one transmitting SCC compensation circuit is included in a primary LCC compensation circuit on a power transmitting device side of an EVSE or topology information of the at least one transmitting SCC compensation circuit. The step S1300 may be performed through communication between an EVCC (Electric Vehicle Communication Controller) on a vehicle side and an SECC (Supply Equipment Communication Controller) on an EVSE side.

The present disclosure may assume, as a prerequisite, that in wireless power transfer (WPT) based on inductive coupling, a compensation circuit based on passive elements such as DS-LCC is included in power circuits on both a vehicle side and an EVSE side.

The present disclosure proposes an additional compensation circuit including a combination of passive elements and active elements (switches) in addition to a basic compensation circuit based on passive elements.

The additional compensation circuit of the present disclosure may vary operating conditions, such as impedance initially given by passive elements, based on an operation using a combination of passive elements and active elements (switches).

The additional compensation circuit of the present disclosure may vary operating conditions, such as impedance, to cope with a decrease in power transfer efficiency due to misalignment between a primary coil and a secondary coil or a separation distance during wireless power transfer.

The additional compensation circuit of the present disclosure may vary operating conditions to cope with cases where power transfer conditions are affected by a battery state of charge (SoC) of a vehicle, a power supply capability of the vehicle, and specifications of a load when bidirectional power transfer is performed and power is supplied from the vehicle to a grid or another load.

The additional compensation circuit of the present disclosure may provide more diverse compensation capability by arranging a plurality of additional compensation circuits at positions of passive elements of a DS-LCC network.

Although a compensation circuit using a switching-controlled capacitor has been mainly described in the present disclosure, the present disclosure may include various embodiments that enhance compensation capability by utilizing synergy based on combinations of various passive elements and active elements.

In the embodiments of FIGS. 1 to 11, although not illustrated in the drawings, a processor and a memory may be electrically connected to respective components, and operations of the respective components may be controlled or managed by the processor in order to perform at least part of communication for obtaining effective impedance characteristics, data collection/acquisition, computation, calculation, and determination processes for determining operating conditions, and/or control processes for various parameters for performing wireless power transfer.

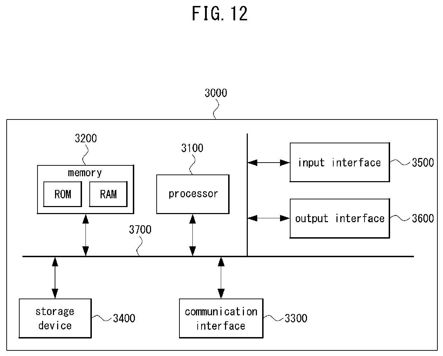

At least a part of the communication, data collection/acquisition, computation, calculation, determination, and/or control processes may be executed by a computing system 3000 of FIG. 12.

FIG. 12 is a block diagram illustrating a generalized configuration of a wireless power transmitting pad device, a wireless power receiving pad device, a wireless power transfer (WPT) system, or a computing system controlling the same according to exemplary embodiments of the present disclosure.

A computing system 3000 according to exemplary embodiments of the present disclosure may include at least one processor 3100 and a memory 3200 storing instructions that cause the at least one processor 3100 to perform at least one step. At least some steps of the method according to exemplary embodiments of the present disclosure may be performed by the at least one processor 3100 loading and executing instructions from the memory 3200.

The processor 3100 may refer to a central processing unit (CPU), a graphics processing unit (GPU), or a dedicated processor on which methods according to embodiments of the present disclosure are performed.

Each of the memory 3200 and the storage device 3400 may include at least one of a volatile storage medium and a non-volatile storage medium. For example, the memory 3200 may include at least one of a read only memory (ROM) and a random access memory (RAM).

In addition, the computing system 3000 may include a communication interface 3300 configured to perform communication through a wired and/or wireless network.

Further, the computing system 3000 may further include a storage device 3400, an input interface 3500, an output interface 3600, and the like.

In addition, respective components included in the computing system 3000 may be connected to each other through a bus 3700 to communicate with each other.

A device including the processor 3100 according to exemplary embodiments of the present disclosure may be, for example, a communicable desktop computer, laptop computer, notebook, smartphone, tablet PC, mobile phone, smart watch, smart glasses, e-book reader, portable multimedia player (PMP), portable game console, navigation device, digital camera, digital multimedia broadcasting (DMB) player, digital audio recorder, digital audio player, digital video recorder, digital video player, personal digital assistant (PDA), or the like.

A device for controlling power transfer or determining an operating condition according to exemplary embodiments of the present disclosure may be installed on an electric vehicle and/or a charging station in association with an electric vehicle charging system, an electric vehicle supply equipment (EVSE), and/or a charging manipulator, and may include a processor 3100 configured to execute at least one instruction received from the memory 3200.

The processor 3100 of the device for charging an electric vehicle according to exemplary embodiments of the present disclosure may perform a method executed by a computing system or a controller on a charging station side interworking with an EVSE including a charging manipulator.

The processor 3100 of the device for charging an electric vehicle according to exemplary embodiments of the present disclosure may perform a method executed by a computing system or a controller on a vehicle side.

Operations of the method according to embodiments of the present disclosure may be implemented as a program or code readable by a computer and stored in a computer-readable recording medium. The computer-readable recording medium may include all kinds of recording devices in which information readable by a computer system is stored. In addition, the computer-readable recording medium may be distributed in computer systems connected through a network so that computer-readable programs or codes may be stored and executed in a distributed manner.

Further, the computer-readable recording medium may include hardware devices specially configured to store and execute program instructions, such as ROM, RAM, flash memory, and the like. The program instructions may include not only machine language code generated by a compiler but also high-level language code executable by a computer using an interpreter or the like.

Some aspects of the present disclosure have been described in the context of an apparatus, but such descriptions may also correspond to descriptions according to a method, wherein blocks or devices correspond to method steps or features of method steps. Similarly, aspects described in the context of a method may also be represented as corresponding blocks, items, or features of a corresponding apparatus. Some or all of the method steps may be performed by (or using) a hardware device such as a microprocessor, a programmable computer, or an electronic circuit. In some embodiments, at least one or more of the most important method steps may be performed by such a device.

In embodiments, a programmable logic device (for example, a field programmable gate array) may be used to perform some or all of the functions of the methods described herein. In embodiments, a field programmable gate array may operate in conjunction with a microprocessor to perform one of the methods described herein. In general, the methods are preferably performed by any hardware device.

Although the present disclosure has been described with reference to preferred embodiments, those skilled in the art will understand that the present disclosure may be variously modified and changed without departing from the spirit and scope of the present disclosure as defined in the following claims.

## Claims

1. A power receiving apparatus disposed in a chargeable mobility or device and configured to receive power from a primary device, comprising:
a secondary coil; and
an inductor-capacitor-capacitor (LCC) compensation circuit configured to transfer power delivered from the secondary coil to a charger,
wherein the inductor-capacitor-capacitor compensation circuit includes at least one switching-controlled capacitor (SCC) compensation circuit.

2. The power receiving apparatus of claim 1, wherein the at least one SCC compensation circuit is connected in series or in parallel with at least one passive element included in the LCC compensation circuit.

3. The power receiving apparatus of claim 1, wherein the at least one SCC compensation circuit comprises:
a switching-controlled capacitor; and
a control switch connected in series with the switching-controlled capacitor and operated by a switching control signal.

4. The power receiving apparatus of claim 3, wherein the at least one SCC compensation circuit provides an impedance that varies based on a duty cycle of the control switch.

5. The power receiving apparatus of claim 3, wherein the switching control signal is a pulse-based control signal.

6. The power receiving apparatus of claim 1, wherein an operating condition of the at least one SCC compensation circuit is determined based on a change in an effective impedance characteristic of the secondary coil according to a separation distance between a primary coil on a primary device side and the secondary coil.

7. The power receiving apparatus of claim 1, wherein an operating condition of the at least one SCC compensation circuit is determined based on whether an operation mode is a grid-to-vehicle (G2V) power transfer mode in which the secondary coil receives power or a vehicle-to-grid (V2G) power transfer mode in which power is transmitted from the secondary coil.

8. The power receiving apparatus of claim 1, wherein an operating condition of the at least one SCC compensation circuit is determined based on whether at least one transmitting SCC compensation circuit is included in a transmitting LCC compensation circuit on the primary device side.

9. The power receiving apparatus of claim 1, wherein an operating condition of the at least one SCC compensation circuit is determined based on at least one of:
a topology of at least one transmitting SCC compensation circuit included in a transmitting LCC compensation circuit on the primary device side; or
a topology of the at least one SCC compensation circuit.

10. A power transmitting apparatus associated with a primary device and configured to transmit power to a chargeable mobility or device, comprising:
a primary coil; and
an inductor-capacitor-capacitor (LCC) compensation circuit configured to transfer power from a power grid to the primary coil,
wherein the LCC compensation circuit includes at least one switching-controlled capacitor (SCC) compensation circuit.

11. The power transmitting apparatus of claim 10, wherein the at least one SCC compensation circuit is connected in series or in parallel with at least one passive element included in the LCC compensation circuit.

12. The power transmitting apparatus of claim 10, wherein the at least one SCC compensation circuit comprises:
a switching-controlled capacitor; and
a control switch connected in series with the switching-controlled capacitor and operated by a switching control signal.

13. A power transfer method comprising:
obtaining an effective impedance characteristic of a secondary coil included in a power receiving apparatus disposed in a chargeable mobility or device and receiving power from a primary device;
determining an operating condition of at least one switching-controlled capacitor (SCC) compensation circuit in an inductor-capacitor-capacitor (LCC) compensation circuit based on the effective impedance characteristic of the secondary coil; and
performing wireless power transfer by inductive coupling of the secondary coil based on the operating condition.

14. The method of claim 13, wherein the determining of the operating condition comprises determining the operating condition based on a change in the effective impedance characteristic of the secondary coil according to a separation distance between a primary coil on the primary device side and the secondary coil.

15. The method of claim 13, wherein the determining of the operating condition comprises determining the operating condition based on whether an operation mode is a grid-to-vehicle (G2V) power transfer mode or a vehicle-to-grid (V2G) power transfer mode.

16. The method of claim 13, wherein the determining of the operating condition comprises determining the operating condition based on whether at least one transmitting SCC compensation circuit is included in a transmitting LCC compensation circuit on the primary device side.

17. The method of claim 13, wherein the determining of the operating condition comprises determining the operating condition based on at least one of:
a topology of at least one transmitting SCC compensation circuit included in a transmitting LCC compensation circuit on the primary device side; or
a topology of the at least one SCC compensation circuit.

18. The method of claim 13, wherein the obtaining of the effective impedance characteristic comprises obtaining the effective impedance characteristic of the secondary coil during an initial power transfer process or a test power transfer process.

19. The method of claim 13, wherein the performing of the wireless power transfer comprises providing a variable impedance based on a duty cycle of a control switch by controlling the duty cycle of the control switch, which is connected in series with a switching-controlled capacitor in the at least one SCC compensation circuit, using a switching control signal.

20. The method of claim 13, further comprising:
before the determining of the operating condition, obtaining whether at least one transmitting SCC compensation circuit is included in a transmitting LCC compensation circuit on the primary device side or obtainingtopology information of the at least one transmitting SCC compensation circuit.
